(19) Europäisches Patentamt

European Patent Office

Office européen des brevets

(11) **EP 4 765 935 A1**

(12) **EUROPEAN PATENT APPLICATION**
published in accordance with Art. 153(4) EPC

(43) Date of publication:
**24.06.2026 Bulletin 2026/26**

(21) Application number: **24868448.2**

(22) Date of filing: **18.07.2024**

(51) International Patent Classification (IPC):
*H04W 24/08* (2009.01)  *H04W 4/80* (2018.01)
*H04L 1/00* (2006.01)  *H04L 1/1607* (2023.01)
*H04L 1/20* (2006.01)

(52) Cooperative Patent Classification (CPC):
**H04L 1/00; H04L 1/16; H04L 1/1607; H04L 1/20;
H04W 4/80; H04W 24/08**

(86) International application number:
**PCT/KR2024/010353**

(87) International publication number:
**WO 2025/063466 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.09.2023 KR 20230125025**

(71) Applicant: **Samsung Electronics Co., Ltd.
Suwon-si, Gyeonggi-do 16677 (KR)**

(72) Inventors:
• **SEO, Seungbeom**
  **Suwon-si, Gyeonggi-do 16677 (KR)**
• **LIM, Yeonju**
  **Suwon-si, Gyeonggi-do 16677 (KR)**
• **SHIN, Sungin**
  **Suwon-si, Gyeonggi-do 16677 (KR)**
• **CHOI, Junyoung**
  **Suwon-si, Gyeonggi-do 16677 (KR)**

(74) Representative: **Nederlandsch Octrooibureau
P.O. Box 29720
2502 LS The Hague (NL)**

(54) **BLUETOOTH LOW ENERGY (BLE)-BASED ELECTRONIC DEVICE FOR DETERMINING
CHANNEL AND TRANSMISSION RATES, AND OPERATING METHOD THEREFOR**

(57) The present disclosure relates to a 5G or 6G communication system for supporting higher data transmission rates. According to various embodiments of the present disclosure, a method performed by an electronic device may comprise: acquiring a first channel measurement result, based on a channel bandwidth different from a channel bandwidth of a Bluetooth low energy (BLE), at a first point in time; identifying a first channel corresponding to the channel bandwidth of the BLE as a transmission channel on the first channel measurement result; determining the channel quality of the first channel on the channel measurement of the first channel; and maintaining the first channel as the transmission channel when the channel quality of the first channel is determined to be a category for a channel maintenance at a second point in time coming a predetermined period of time after the first point in time or changing a second channel different from the first channel to the transmission channel when the channel quality of the first channel is determined to be a category for a channel change.

FIG.5A

EP 4 765 935 A1

## Description

[Technical Field]

The disclosure relates to an electronic device for selecting a channel and determining a transmission speed for high-speed transmission based on Bluetooth low energy (BLE), and an operation method thereof.

[Background Art]

5th generation (5G) mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a low density parity check (LDPC) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial Internet of Things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

Recently, as technologies using low-cost and low-power wireless devices or wireless links have attracted significant attention in the field of wireless communication-related technologies, short-range communication technologies have been widely used. Among such short-range communication technologies, the Bluetooth communication scheme operates in the 2.4 GHz or 5 GHz frequency bands and is capable of transmitting and receiving data within a certain distance (e.g., 10 m).

[Disclosure of Invention]

[Technical Problem]

Bluetooth communication between electronic devices may be affected by conditions of the electronic devices. For example, in the case of Bluetooth communication without a separate channel access scheme, such as listen before talk (LBT), a frequency channel hopping technique is applied to reduce interference from other channels. When such frequency channel hopping is not adaptively applied, a Bluetooth communication connection may be delayed, and accordingly, a user of an electronic device may experience inconvenience in using a service based on Bluetooth communication. Therefore, in a situation where a delay in a Bluetooth communication connection may occur, a method for shortening time required for a Bluetooth communication connection may be required.

Various embodiments of the disclosure may provide a method and an electronic device for performing a smooth Bluetooth communication connection in a situation where a delay in a Bluetooth communication connection may occur.

Various embodiments of the disclosure are to provide a device and a method capable of effectively providing services in a wireless communication system.

The technical subjects pursued in the disclosure may not be limited to the above-mentioned technical subjects, and other technical subjects which are not mentioned herein may be clearly understood from the following description by those skilled in the art to which the disclosure pertains.

[Solution to Problem]

According to various embodiments of the disclosure, a method performed by an electronic device may include acquiring, at a first time point, a first channel measurement result based on a channel bandwidth different from a channel bandwidth of Bluetooth low energy (BLE), identifying, as a transmission channel, a first channel corresponding to the channel bandwidth of the BLE, based on the first channel measurement result, determining a channel quality of the first channel, based on a channel measurement for the first channel, and at a second time point at which a predetermined period has elapsed from the first time point, in case that the channel quality of the first channel is determined as a category for a channel maintenance, maintaining the first channel as the transmission channel, or in case that the channel quality of the first channel is determined as a category for a channel change, changing the transmission channel to a second channel different from the first channel.

According to various embodiments of the disclosure, an electronic device may include a communication circuit for Bluetooth low energy (BLE), and a processor coupled with the communication circuit, wherein the processor is configured to acquire, at a first time point, a first channel measurement result based on a channel bandwidth different from a channel bandwidth of the BLE, identify, as a transmission channel, a first channel corresponding to the channel bandwidth of the BLE, based on the first channel measurement result, determine a channel quality of the first channel, based on a channel measurement for the first channel, and at a second time point at which a predetermined period has elapsed from the first time point, in case that the channel quality of the first channel is determined as a category for a channel maintenance, maintain the first channel as the transmission channel, or in case that the channel quality of the first channel is determined as a category for a channel change, change the transmission channel to a second channel different from the first channel.

[Advantageous Effects of Invention]

The disclosure provides a device and a method capable of effectively providing services in a wireless communication system.

In an electronic device and a method thereof according to various embodiments, an adaptive channel is selected and a transmission speed is determined for a Bluetooth communication connection in a situation in which a delay in a Bluetooth communication connection may occur, so that a Bluetooth communication-based service can be smoothly provided to a user even in a situation in which a delay in a Bluetooth communication connection may occur.

Advantageous effects obtainable from the disclosure may not be limited to the above-mentioned effects, and other effects which are not mentioned herein may be clearly understood from the following description by those skilled in the art to which the disclosure pertains.

[BRIEF DESCRIPTION OF THE DRAWINGS]

FIG. 1 illustrates a block diagram of an electronic device in a network environment according to various embodiments of the disclosure.
FIG. 2 illustrates connections between an electronic device and multiple external electronic devices according to various embodiments of the disclosure.
FIG. 3 illustrates a structure of an electronic device according to various embodiments of the disclosure.

FIGS. 4A and 4B illustrate channels in frequency bands based on various RF technologies according to various embodiments of the disclosure.

FIG. 5A illustrates an example of channel selection and management according to various embodiments of the disclosure.

FIG. 5B illustrates various examples for selecting a channel based on a channel map of a different RF according to various embodiments of the disclosure.

FIGS. 6A to 6C illustrate specific examples for selecting a channel based on BLE-based channel quality according to various embodiments of the disclosure.

FIG. 7 illustrates an operation flow of an electronic device for channel selection and management according to various embodiments of the disclosure.

FIG. 8A illustrates an example of a training sequence transmitted for transmission speed selection according to various embodiments of the disclosure.

FIG. 8B illustrates various examples for selecting a modulation scheme and a transmission speed, based on transmission of a training sequence according to various embodiments of the disclosure.

FIGS. 9A to 9C illustrate specific examples of performing channel selection and transmission speed determination between electronic devices according to various embodiments of the disclosure.

FIG. 10 illustrates an operation flow of an electronic device for selecting a transmission speed according to various embodiments of the disclosure.

[Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit," or divided into a larger number of elements, or a "unit." Moreover, the elements and "units" may be implemented to reproduce one or more CPUs within a device or a security multimedia card. Furthermore, the "unit" in embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

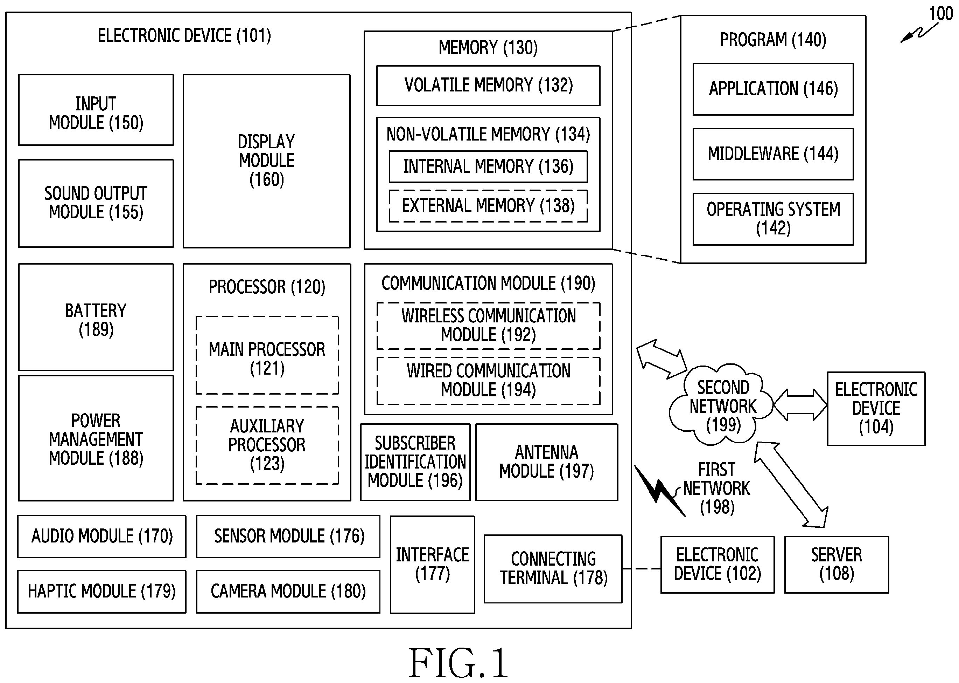

FIG. 1 illustrates a block diagram of an electronic device in a network environment according to various embodiments of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134.

According to an embodiment, the processor 120 may include a main processor 121 (e.g., a central processing unit (CPU) or an application processor (AP)), or an auxiliary processor 123 (e.g., a graphics processing unit, a neural processing unit (NPU), an image signal processor, a sensor hub processor, or a communication processor) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial model may be generated through machine learning. For example, such learning may be performed, by the electronic device 101 itself where the artificial intelligence model is performed or may also be performed via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited to the above examples. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth TM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support high-speed transmission of high-capacity data (enhanced mobile broadband (eMBB)), terminal power minimization and multi-terminal access (massive machine type communications (mMTC)), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device). According to an embodiment, the antenna module 197 may include an antenna including a radiating element including a conductive material or a conductive pattern formed on a substrate (e.g., a PCB). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on or adjacent to a first surface (e.g., the bottom surface) of the printed circuit board and capable of supporting a designated high-frequency band (e.g., the mmWave band), and a plurality of antennas (e.g., an array antenna) disposed on or adjacent to second surface (e.g., the top or side surface) of the printed circuit board and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To this end, a cloud computing, distributed computing, mobile edge computing (MEC), or client-server computing technology may be used, for example. The electronic device 101 may provide ultralow-latency services by using, for example, distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively," as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit." The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include codes generated by a compiler or code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

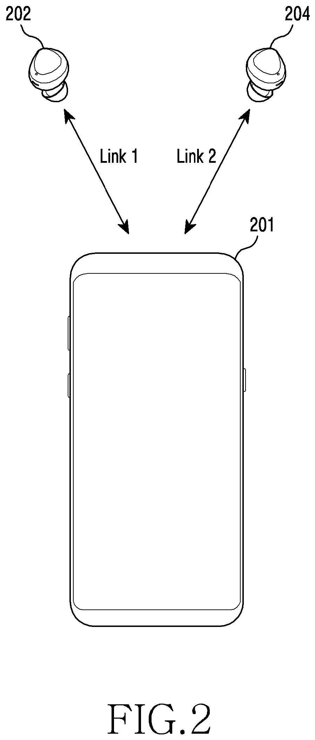

FIG. 2 illustrates connections between an electronic device and multiple external electronic devices according to various embodiments of the disclosure.

Referring to FIG. 2, an electronic device 201 may be a master device or a source device which provides data (e.g., audio data or multimedia data). The electronic device 201 may be an electronic device such as a smartphone, and may be the electronic device 101 of FIG. 1. According to an embodiment, external electronic device #1 202 and external electronic device #2 204 may be slave devices or sink devices which may receive data from the electronic device 201 and process or output the received data. Each of the external electronic device #1 202 and the external electronic device #2 204 may be the electronic device 102 or the electronic device 104 of FIG.

1.

The electronic device 201 and the external electronic device #1 202 or the electronic device 201 and the external electronic device #2 204 may be connected to each other based on a wireless communication technology (e.g., Bluetooth legacy (or classic) or a Bluetooth low energy (BLE) communication technology) to perform data transmission and reception.

In various embodiments described below, a case where the electronic device 201 transmits data to two external electronic devices 202 and 204 will be described. For example, the electronic device 201 may transmit sound data, which may be provided to a user, to the external electronic device #1 202 and/or the external electronic device #2 204.

According to an embodiment, the external electronic device #1 202 and/or the external electronic device #2 204 may be devices included in one set. For example, the devices included in a single set may be devices that are connected through separate communication links, respectively, to provide a relevant function so as to provide a single integrated service (e.g., stereo sound output or 5.1 channel sound output). For example, the external electronic device #1 202 and the external electronic device #2 204 may be wireless earphone devices operating as one set. In addition, the external electronic device #1 202 may be one of a left external device and a right external device, and the external electronic device #2 204 may be the other one of the left external device and the right external device. In an embodiment, when the external electronic device #1 202 and the external electronic device #2 204 are implemented as wireless earphones, each of the external electronic device #1 202 and/or the external electronic device #2 204 may receive various data (e.g., data for synchronizing sound which may be output from the wireless earphones, data for adjusting sound, or a response signal corresponding to a signal transmitted by the electronic device 201) from the electronic device 201.

In FIG. 2, an example in which the electronic device 201 is connected to two external electronic devices 202 and 204 is described, but the disclosure is not limited thereto, and the electronic device 201 may be connected to three or more different numbers of external electronic devices. In addition, in relation to devices which receive data transmitted by the electronic device 201, various embodiments may be applied not only to external devices but also to other types of devices (e.g., a smartphone, a smartwatch, or a tablet PC) which can communicate wirelessly with the electronic device 201.

According to an embodiment, the electronic device 201 may establish a first communication link (link 1) to perform data communication with the external electronic device #1 202. In an embodiment, the electronic device 201 may establish a second communication link (link 2) to perform data communication with the external electronic device #2 204. In addition, the external electronic device #1 202 and/or the external electronic device #2 204 may be additionally connected through a separate third communication link (not shown) if necessary.

According to an embodiment, connection-oriented communication may be performed through the first communication link and the second communication link. In addition, connectionless communication may be performed between the electronic device 201 and the external electronic device #1 202 and the external electronic device #2 204. The connection-oriented communication and connectionless communication may be performed through channels.

According to an embodiment, the electronic device 201 may establish a communication link with the external electronic device #1 202 and/or the external electronic device #2 204 or transmit various signals (e.g., an advertising signal) to the external electronic device #1 202 and/or the external electronic device #2 204 for synchronization.

According to an embodiment, the electronic device 201 may receive various information (e.g., connection device information and/or device attribute information) from the external electronic device #1 202 and/or the external electronic device #2 204, and provide various user interfaces (e.g., a notification or control interface) through a display (e.g., the display module 160 of FIG. 1), based on the received information.

According to an embodiment, the electronic device 201 may transmit and receive a signal for performing various operations described below to and from the external electronic device #1 202 and/or the external electronic device #2 204.

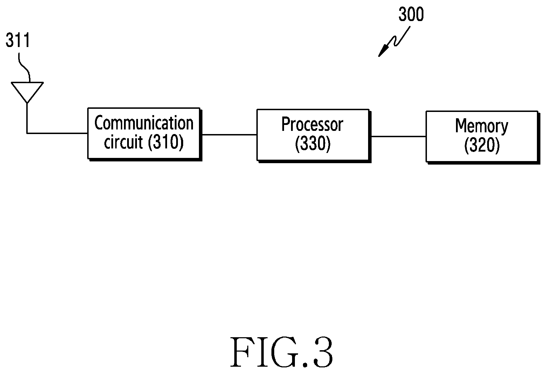

FIG. 3 illustrates a structure of an electronic device according to various embodiments of the disclosure.

Referring to FIG. 3, a configuration 800 of an electronic device may be at least one configuration of the electronic device 100 of FIG. 1, the electronic device 201 of FIG. 2, or the external electronic devices 202 and 204 of FIG. 2.

Referring to FIG. 3, an electronic device 300 according to an embodiment of the disclosure may include a communication circuit 310, an antenna module 311, a memory 320, and a processor 330. However, the configuration of the electronic device 300 is not limited thereto, and may include a part of the above-described components of FIG. 3, or may further include at least one other component (e.g., the input module 150 and the display module 160) in addition to the above-described components. In an embodiment, the electronic device 300 may be the electronic device 101 of FIG. 1 and/or the electronic device 201 of FIG. 2. The electronic device 300 of FIG. 3 may include a component which is the same as or similar to at least one of the components (e.g., modules) of the electronic device 101 of FIG. 1. Accordingly, the communication circuit 310 may correspond to the communication module 190 or the wireless communication module 192 of FIG. 1, and the antenna module 311 may correspond to the antenna module 197 of FIG. 1. In addition, the memory 320 and the processor 330 may correspond to the memory 130 and the processor 120 of FIG. 1, and when the electronic device 200 further includes other components, the other components may also correspond to the components of FIG. 1.

The communication circuit 310 may support wireless communication between the electronic device 300 and an external electronic device. For example, the communication circuit 310 may transmit and receive a signal and/or data to and from a first external electronic device or a second external electronic device by using a frequency band supported by wireless communication according to a prescribed wireless communication protocol. In an embodiment, the communication circuit 310 may communicate with the external electronic device through a short-range wireless communication network, such as ultra-wideband (UWB), Bluetooth, Bluetooth low energy (BLE), wireless fidelity (Wi-Fi) direct, or infrared data association (IrDA). In an embodiment, the communication circuit 310 may include a module for Bluetooth legacy communication and/or BLE communication as a wireless communication module. The communication circuit 310 may operate independently of the processor 330 and may include one or more communication processors which support wireless communication. In an embodiment, the communication circuit 310 may also be referred to as a communication interface, a transceiver, or a communication module.

The antenna module 311 may include multiple antennas, and at least one antenna suitable for a communication scheme used in a communication network (e.g., the first network 198 of FIG. 1) may be selected from the multiple antennas by the communication circuit 310.

The memory 320 may store various information for an operation of the electronic device 300. The information stored in the memory 320 may include, for example, input data or output data for software and a command related thereto. In an embodiment, the information stored in the memory 320 may include at least one instruction for auxiliary operations of channel selection and transmission rate selection. The instruction(s) may correspond to the program 140 of FIG. 1. The instruction(s) may be executed by the processor 330, and the electro device 310 may perform the operations according to various embodiments of the disclosure by executing the instruction(s) by the processor 330.

The processor 330 (or a controller) may control at least one other component (e.g., a hardware or software component) of the electronic device 300 and perform various data processing or operations. As at least a part of data processing or computation, the processor 330 may load, in the memory 320, a command or data received from another element (e.g., the communication circuit 310), process the command or data stored in the memory 320, and store resultant data in the memory 320. According to an embodiment, the processor 330 may execute at least one operation of instructions for channel generation or transmission rate management according to various embodiments of the disclosure described below.

Recently, with the development of electronic devices, the importance of wireless communication between an electronic device (e.g., a smartphone) for providing data and an external electronic device has increased. In particular, in an environment where wireless communication using radio frequency (RF) technology of Bluetooth (BT) or Bluetooth low energy (BLE) is used between electronic devices, an increase in data traffic and high throughput are necessary, and thus a method for supporting stable lossless streaming is required. The BLE refers to a technology which has a duty cycle of a few milliseconds (ms), unlike the existing Bluetooth communication and is thus designed to enable the electronic devices to stay in a sleep state for most of the time in order to reduce the power consumption.

According to various embodiments of the disclosure, for the sake of descriptive convenience, an RF communication system such as BLE or Wi-Fi will be described below by way of example, but the disclosure is not limited thereto. For example, it is obvious that any system having different channel bandwidths (e.g., first communication, second communication, or the like) may be included.

Hereinafter, according to various embodiments of the disclosure, various methods will be described for determining an optimal transmission scheme and transmission format and adaptively adjusting a data transmission rate so that an electronic device based on BLE transmits and receives data without a loss or delay in traffic.

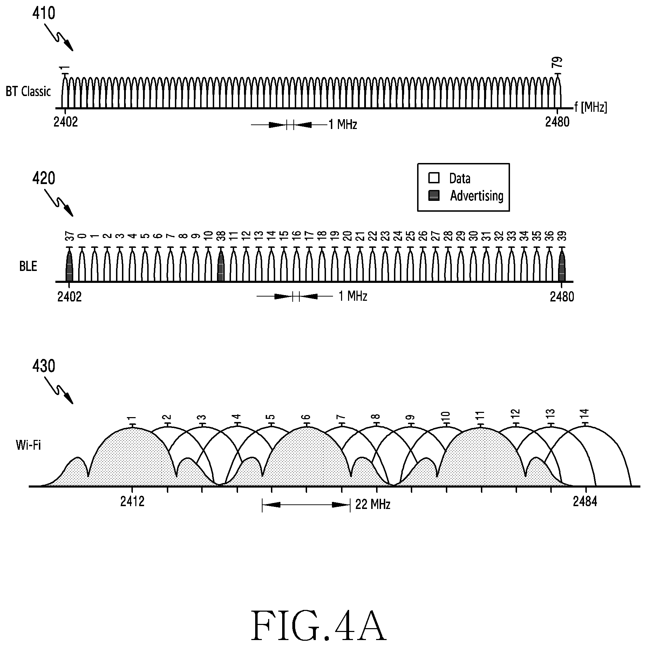

FIG. 4A illustrates channels in frequency bands based on various radio frequency (RF) technologies according to various embodiments of the disclosure. More specifically, FIG. 4A illustrates a frequency band 410 of legacy Bluetooth (e.g., Bluetooth Classic), a frequency band 420 of BLE, and a frequency band 430 of Wi-Fi within a frequency band range of 2.4GHz.

According to an example, in the case of the frequency band 410 of Bluetooth Classic, each channel may have a bandwidth of about 1MHz and a maximum data transmission rate of about 3Mbps, and in this case, the throughput of an application may be about 2.1Mbps.

According to an example, in the case of the frequency band 420 of BLE, each channel may have a bandwidth of about 1MHz or 2MHz, a maximum data transmission rate of about 2Mbps, and a short operation cycle, so that the throughput of an application may be about 0.7Mbps. The BLE is highly power-efficient when an average transmission rate is equal to or less than 10kbps and thus may be suitable for use in ultra-small Internet of Things (IoT) devices with limited power supply, such as watches, toys, beacons, and wearable computers (wearable devices). However, due to the characteristics of the BLE which periodically transmits a channel and an advertising packet as shown in the BLE frequency band 420 of FIG. 4A, the BLE may not be suitable for high-rate communication or transmission and reception of a large amount of traffic compared to the Bluetooth Classic.

Therefore, according to various embodiments of the disclosure, various methods for high-rate transmission based on high data throughput (BLE HDT) are described so that BLE for low power may achieve higher throughput. Hereinafter, for convenience, various embodiments are described based on a Bluetooth standard (e.g., a Bluetooth special interest group (SIG) standard) or a BLE HDT specification, but are not limited thereto, and any modification or addition of additional elements may be possible as long as a higher transmission rate and throughput may be obtained.

Referring to FIG. 4A, communication based on Bluetooth Classic (BT Classic) or BLE may have a narrower channel bandwidth than other unlicensed band communication technologies (e.g., Wi-Fi-based communication), which may cause interference on a channel. In this case, due to the characteristics of Bluetooth communication that does not have a separate channel access mechanism such as listen before talk (LBT), a frequency channel hopping technique may be applied to mitigate channel interference. For example, BLE-based HDT may use frequency diversity between transmissions to mitigate channel interference, and in this case, a cycle or channel selection related to channel hopping may be applied according to the standard specification for BLE HDT. For example, according to the Bluetooth standard specification, a BT-based electronic device may be configured to hop a frequency channel 1600 times per second to mitigate channel interference.

In addition to the existing frequency channel hopping technique as described above, various embodiments of the disclosure may include a method for generating an adaptive hopping sequence according to a channel interference situation and accordingly improving communication efficiency. More specifically, methods for improving a transmission success rate and data transmission performance through advancement of a Bluetooth frequency hopping scheme and improvement of the reliability of transmission will be described.

The following situations may be assumed to improve a transmission rate for lossless data, based on a limited frequency channel and traffic amount.

According to an example, an effective data transmission rate of Bluetooth (hereinafter, for convenience, including both BLE and Bluetooth Classic) may be significantly lower compared to the amount of data that is generally required to be transmitted losslessly. Taking lossless sound source transmission as an example, when a sound source in an ultra high quality (UHQ) format (e.g., 24 bit, 96kHz), which is a type of high-quality sound source which includes a wide sound range and compensates for distortion, is encoded using a lossless audio codec (e.g., a compression ratio of about 57%), an audio frame of about 2.67Mbps may be generated. In this case, a transmission rate of an electronic device layer required for streaming without a delay may be as shown in the following equation 1.

[Equation 1]

$$R_P = R_A(1 + \alpha)\beta/\gamma$$

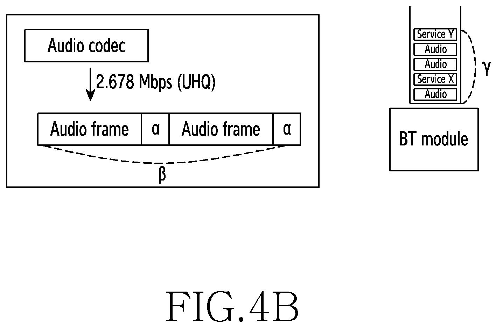

Here, R_P may refer to a transmission rate of a physical layer, R_A may refer to a transmission rate of an application layer, may refer to an overhead ratio such as a header or trailer, may refer to a value obtained by considering retransmission in case of transmission failure, and may refer to the ratio of Bluetooth resources used for music streaming. FIG. 4B is an example diagrammatically illustrating such parameters.

Based on Equation 1 and the example of FIG. 4B, a physical layer of an electronic device should support a transmission rate of approximately 11.75 Mbps to enable lossless and delay-free music streaming. However, a physical layer transmission rate (e.g., 2, 3, 4, 6, and 7.5 Mbps) of HDT BLE supported by the current Bluetooth standard specification is only up to 7.5Mbps, and a wider bandwidth or a higher modulation/coding technique is being considered to improve the rate, but there may be a practical limitation due to the possibility of interference with other systems or the cost.

In addition, for lossless and delay-free communication, a method for reducing an overhead may be considered, but it may be difficult to expect a significant improvement width in the currently optimized overhead reduction technology. Alternatively, a Bluetooth resource allocation ratio may be increased, but this may have a limitation in reality. Therefore, the disclosure provides embodiments in which lossless streaming of an electronic device may be performed by determining a transmission scheme for flexibly performing retransmission. For example, if the electronic device may select an appropriate transmission rate by consideration of a channel situation, he ratio of retransmission may be reduced, which may imply an improvement in the transmission success rate.

According to various embodiments of the disclosure, a method for improving a channel selection algorithm (CSA) to improve a transmission success ratio is described. According to a CSA defined in the existing Bluetooth standard, a channel may be hopped in units of events (or subevents). However, according to various embodiments, in case of determining that the interference situation of channel currently used for transmission is good, the electronic device may maintain the current channel for a predetermined period of time (e.g., maximum 30ms) without hopping the channel.

According to various embodiments of the disclosure, a method for selecting a transmission rate before and after data transmission in order to improve a transmission success ratio is described. The electronic device may optimize resource utilization by determining a transmission rate of a payload including a data packet and the like, depending on a channel condition. For example, when a channel condition is poor but a transmission rate is high, there may be the possibility of transmission failure and retransmission, and when the channel condition is good but the transmission rate is low, inefficiency may occur. Therefore, according to an embodiment, a rate selection sequence (RSS) for determining a channel situation first may be defined, and upon identifying a channel situation according to the RSS, the electronic device may adaptively determine (e.g., modulate) an appropriate payload transmission rate, and thus may expect to increase the transmission success rate and improve transmission performance.

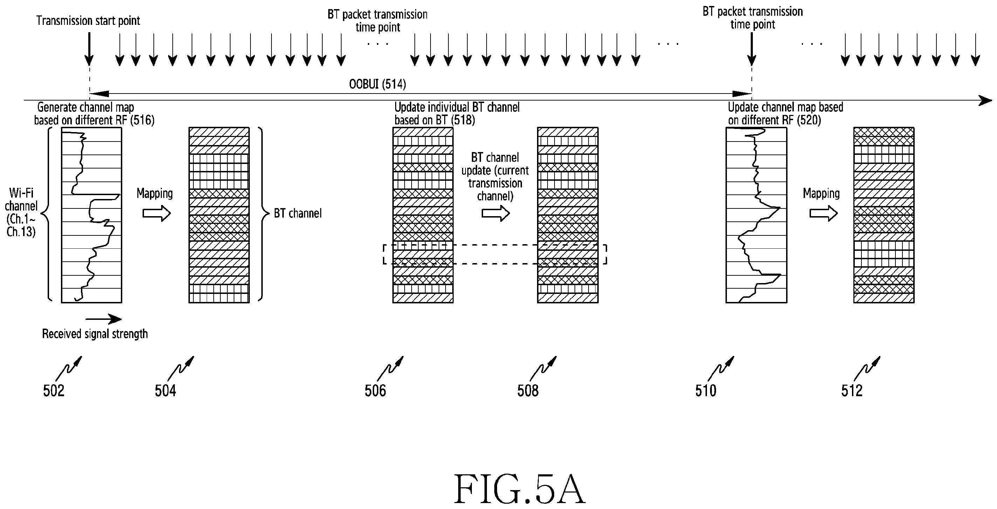

FIG. 5A illustrates an example of channel selection and management according to various embodiments of the disclosure. More specifically, referring to FIG. 5A, a method for improving a channel selection algorithm to improve a transmission success rate is specifically described.

According to an embodiment, an electronic device may generate channel maps (516 and 520), based on a channel result of another communication RF system (for example, Wi-Fi). In general, a system having a larger channel unit (for example, a channel bandwidth) than that of BLE communication, such as Wi-Fi, may perform channel sensing more rapidly, and acquire channel measurement results (for example, channel maps 502 and 510) accordingly. The electronic device may acquire channel measurement results 502 and 510 of a system having a bandwidth different from that of BLE, as determined above, and may generate Bluetooth channel maps 504 and 512 with reference to a BLE channel bandwidth, based on the acquired channel measurement results. For example, the electronic device may acquire channel measurement results 502 and 510 for Wi-Fi channels 1 to 13 in the same frequency band from a separate communication circuit inside the electronic device or from an external electronic device. The electronic device may classify at least one Bluetooth channel corresponding to a band in which interference from other signals is strong (for example, a band in which the strength of a received signal is strong) as a poor-quality channel, based on the acquired channel measurement results 502 and 510. In addition, conversely, the electronic device may classify at least one Bluetooth channel corresponding to a band in which interference from other signals is weak (for example, a band in which the strength of a received signal is weak) as a good-quality channel. According to an embodiment, an operation of mapping (or updating) the Bluetooth channel maps 504 and 512, based on the channel measurement results 502 and 510 of the system having the different bandwidth as described above may be performed when an initial update (516) or an update of the entire channel is required (520), based on a relatively long time unit (for example, defined as an out-of-band update interval 514). However, according to various embodiments of the disclosure, the quality classified by the electronic device is merely an example, and channel quality levels may be further subdivided (for example, unknown, bad, normal, good, great, best, etc.). In addition, for a criterion for classifying channel quality as good quality or poor quality, at least one specific threshold value may be pre-configured, and thus the electronic device may classify channel quality into multiple levels based thereon.

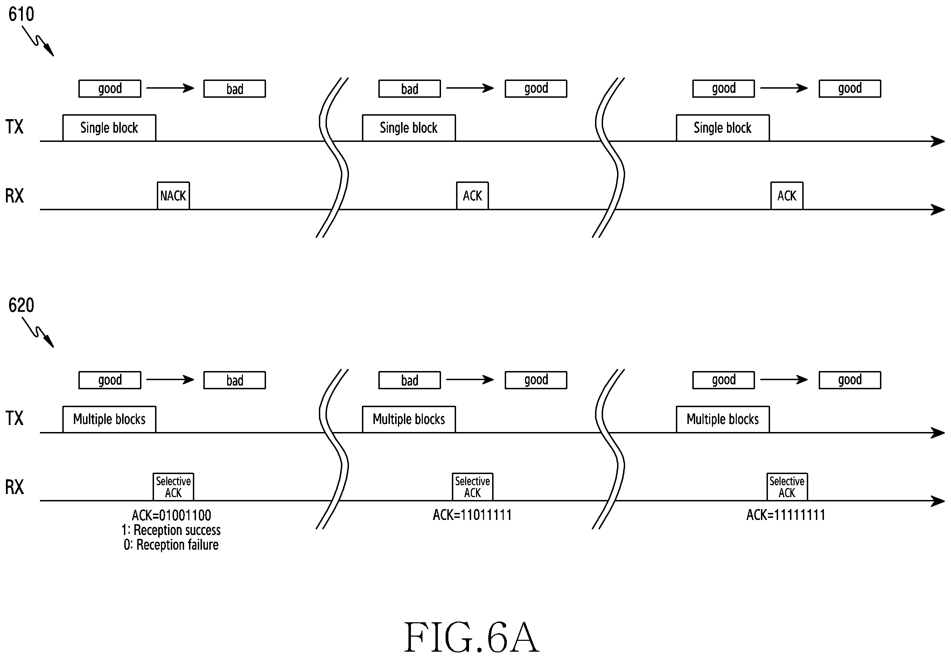

According to an embodiment, the electronic device may manage or update (518) a channel map, based on a channel result of a Bluetooth packet transmission. The electronic device may identify a channel for transmitting a packet and transmit the packet, based on the identified channel, and may acquire a channel measurement result 506 corresponding thereto. For example, as described above, the electronic device may identify a channel for transmitting a Bluetooth packet, according to a channel measurement result based on a channel map having a different bandwidth, and transmit a packet on the identified channel, and may acquire the channel measurement result 506 of the identified channel accordingly. The electronic device may perform an operation 508 of classifying the quality of the channel, based on the measurement result 506 of the identified channel. In this case, the electronic device may determine whether to maintain the channel or to change the channel to a different channel, according to the classified quality of the identified channel. However, according to various embodiments of the disclosure, the quality classified by the electronic device in order to determine whether to maintain or change a channel is merely an example, and channel quality levels may be further subdivided (for example, unknown, bad, normal, good, great, best, etc.). In addition, a criterion for classifying channel quality as good quality (for example, quality related to channel maintenance) or poor quality (quality related to channel change) may also be predefined with at least one specific threshold value, and thus the electronic device may classify channel quality into multiple levels based thereon. In addition, a threshold value for the classified quality may also be separately configured, and according to such a threshold value, the electronic device may determine whether to maintain or change a channel (for example, maintaining the channel when the quality is equal to or greater than normal, and changing the channel when the quality is less than normal). According to an embodiment, an operation 508 of managing a channel for packet transmission, based on the channel measurement result 506 based on the Bluetooth channel bandwidth described above may be performed during the transmission of a packet, based on a relatively long time unit (for example, defined as an out-of-band update interval) 514. As described above, various embodiments of the disclosure may improve transmission efficiency by allowing a frequency channel to be maintained rather than necessarily hopped depending on cases, and more detailed descriptions thereof will be provided with reference to FIGS. 6A to 6C.

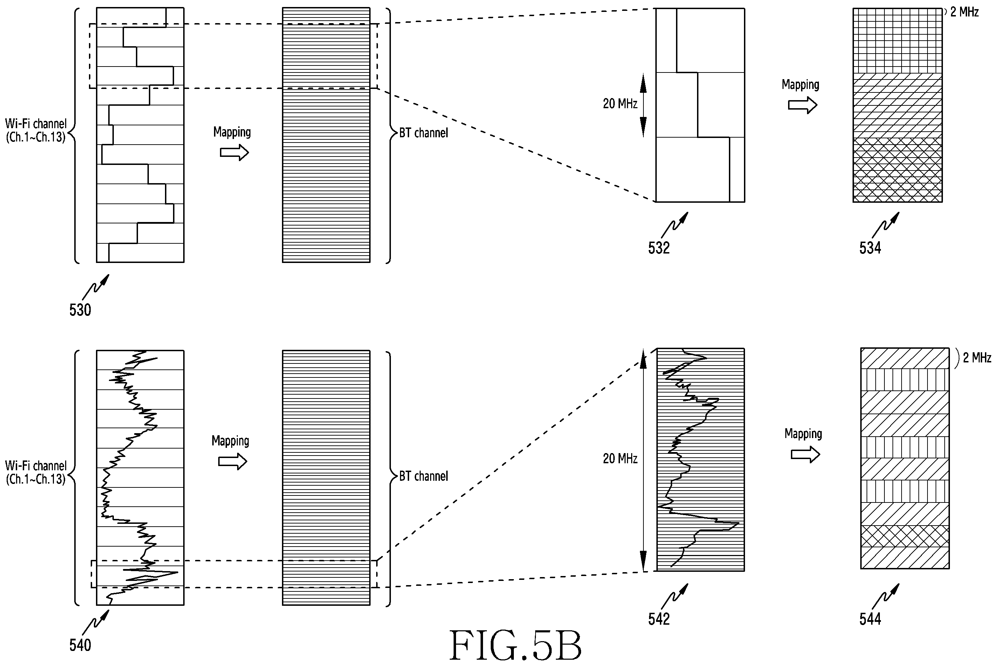

FIG. 5B illustrates various examples for selecting a channel based on a channel map of a different RF according to various embodiments of the disclosure.

As described in FIG. 5A, an electronic device may acquire channel measurement results 530 and 540 based on a bandwidth different from a channel bandwidth of Bluetooth.

In this case, when a sensing frequency unit of the channel measurement result 530 based on the bandwidth different from the Bluetooth channel bandwidth is larger (for example, when a Bluetooth channel bandwidth is 2 MHz and a Wi-Fi sensing unit is 20 MHz), the electronic device may identify and classify quality of at least one Bluetooth channel band corresponding to each band of the channel measurement result. For example, as an example of some channels corresponding to a 60 MHz bandwidth, a channel measurement result 532 based on a different bandwidth may indicate the strength of a received signal for each 20 MHz, which is a frequency sensing unit, and the electronic device may classify quality of a Bluetooth channel for each of 10 channels having a 2 MHz bandwidth corresponding to each unit (534). In this case, at least one Bluetooth channel corresponding to a bandwidth in which a received signal is weak may be classified into a group having good channel quality (for example, channels related to channel maintenance), and at least one Bluetooth channel corresponding to a bandwidth in which a received signal is strong may be classified into a group having bad channel quality (for example, channels related to channel change).

Conversely, even when a sensing frequency unit of the channel measurement result 540 based on the bandwidth different from the Bluetooth channel bandwidth is smaller (for example, when a Bluetooth channel bandwidth is 2 MHz and a Wi-Fi sensing unit is a 312.5 kHz subchannel), the electronic device may identify and classify quality of at least one Bluetooth channel band corresponding to each band of the channel measurement result. For example, as an example of some channels corresponding to a 20 MHz bandwidth, a channel measurement result 542 based on a different bandwidth may indicate the strengths of received signals of 64 blocks each having a 312.5 kHz subchannel bandwidth, which is a frequency sensing unit, and the electronic device may classify quality of a Bluetooth channel for each channel having a 2 MHz bandwidth corresponding to each unit (544). In this case, the electronic device may classify quality of each Bluetooth channel, based on at least one of an arithmetic average, a geometric average, or a value determined according to a predefined threshold value criterion of received signal strengths of about 6.4 blocks of a channel measurement result corresponding to one Bluetooth channel having a 2 MHz bandwidth. In this case, at least one Bluetooth channel corresponding to a bandwidth in which a received signal is weak (for example, determined based on an average of blocks indicating reception strength) may be classified into a group having good channel quality (for example, channels related to channel maintenance), and at least one Bluetooth channel corresponding to a bandwidth in which a received signal is strong may be classified into a group having bad channel quality (for example, channels related to channel change).

However, according to various embodiments of the disclosure, the classification of good or bad among quality levels classified by the electronic device is merely an example, and channel quality levels may be further subdivided (for example, unknown, bad, normal, good, great, best, etc.). In addition, for a criterion for classifying channel quality as good quality or poor quality, at least one specific threshold value may be pre-configured, and thus the electronic device may classify channel quality into multiple levels based thereon.

In addition, according to various embodiments, FIGS. 5A and 5B have been described with reference to Wi-Fi as the system having the bandwidth different from the Bluetooth channel bandwidth, but this is merely an example and the disclosure is not limited thereto, and any channel measurement result having a bandwidth different from the Bluetooth channel bandwidth may be included.

FIGS. 6A to 6C illustrate specific examples for selecting a channel based on Bluetooth low energy (BLE)-based channel quality according to various embodiments of the disclosure. Specifically, while an operation for a full update of a Bluetooth channel map has been described in FIG. 5B, referring to FIGS. 6A to 6C, an operation for updating a channel state, based on Bluetooth channel transmission and reception, separately from or based on the full update of the channel map, is described in detail.

Referring to FIG. 6A, an electronic device may transmit a single block on a channel identified for transmitting a Bluetooth packet (610) or transmit a multi-block including multiple blocks to a receiving device (620).

According to an embodiment, in the case of single-block transmission (610), the electronic device may transmit a packet configured by a single block on a pre-classified channel (good or bad) and receive corresponding feedback from the receiving device. In this case, when the feedback received by the electronic device is an acknowledgment (ACK), the electronic device may determine that a condition or quality of a channel on which the packet has been transmitted is good, and thus may determine the channel as a channel for a subsequent packet transmission. When the feedback received by the electronic device is a negative acknowledgement (NACK), the electronic device may determine that a condition or quality of a channel on which the packet has been transmitted is poor and thus determine the channel as a channel on which a subsequent packet transmission is not to be performed.

According to an embodiment, in the case of multi-block transmission (620), the electronic device may transmit a packet configured by multiple blocks (for example, 8 blocks) on a pre-classified channel (good or bad) and receive corresponding feedback from the receiving device. In this case, the feedback received by the electronic device may include a selective ACK, and the selective ACK may include, for example, a bit string configured by bits corresponding to respective blocks. For example, a 1-bit may be a bit indicating successful reception and a 0-bit may be a bit indicating reception failure, and when the selective ACK has a bit string of 01001100, the electronic device may determine that a condition or quality of a channel on which the packet has been transmitted is poor, and thus may determine the channel as a channel on which a subsequent packet transmission is not to be performed. When the selective ACK of the feedback received by the electronic device has a bit string of 11011111 or 11111111, the electronic device may determine that a condition or quality of a channel on which the packet has been transmitted is good and thus determine the channel as a channel for a subsequent packet transmission.

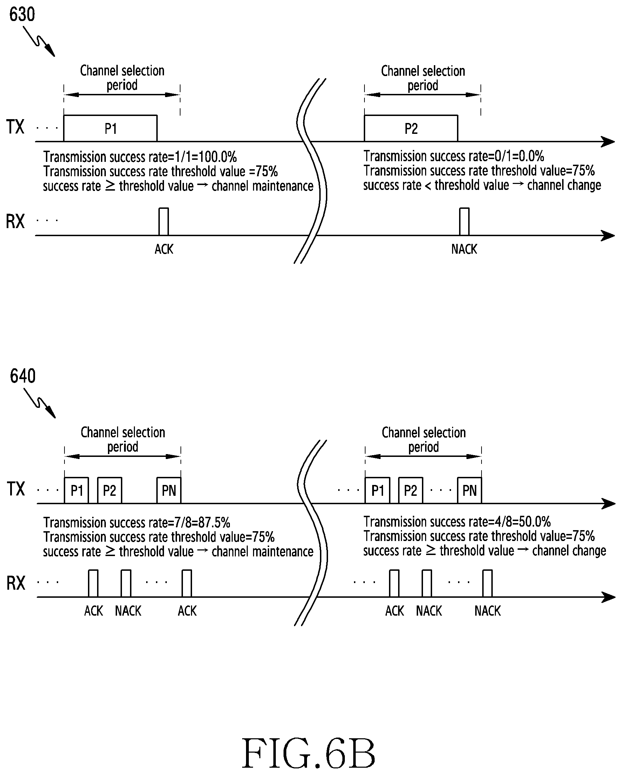

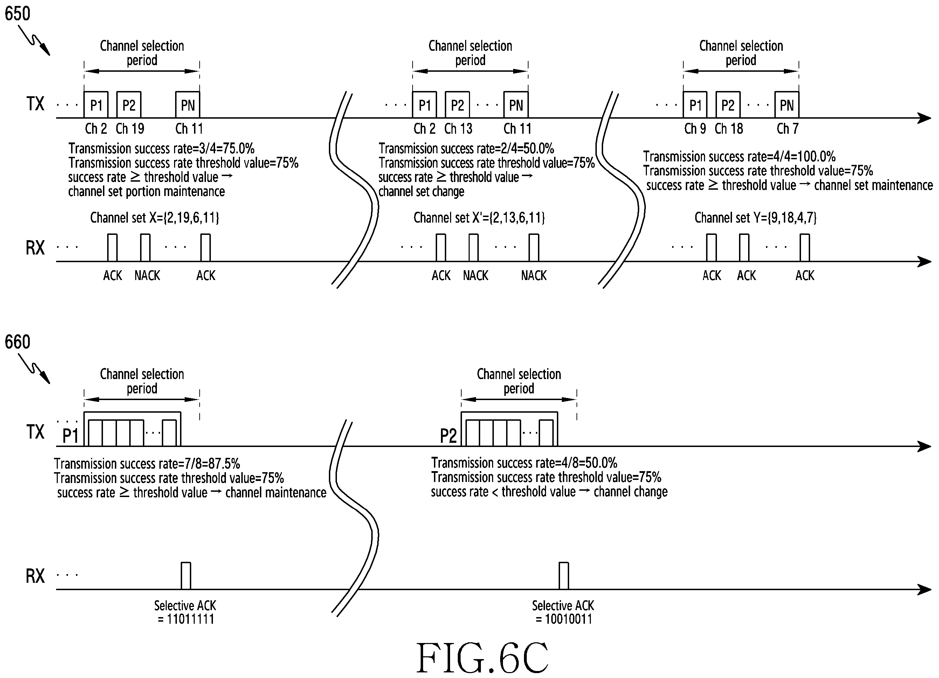

Hereinafter, in FIGS. 6B and 6C, the above-described specific operations of the electronic device for determining a channel state are described together with various examples.

Referring to specific operations in FIGS. 6B and 6C, according to an embodiment, a period for channel selection for maintaining or changing a channel by the electronic device may be predefined. A period for selecting (for example, whether to maintain a current channel or change the channel to a different channel) a next channel by a CSA algorithm may be defined in units of events or subevents or be defined in a separate unit in consideration of more efficient resource utilization and transmission capability. According to an embodiment, the channel selection period may be defined as a period equal to or less than an OOBUI.

According to an embodiment, a ratio of ACKs received by the electronic device during one channel selection period (for example, a ratio of ACK transmissions/receptions to the number of packets or blocks transmitted during a channel selection period) and a corresponding threshold value for channel selection may be defined. According to an embodiment, a ratio of ACKs or a threshold value for determining a channel condition based thereon may be defined based on a ratio of one or more ACKs or a bit string included in an ACK.

Referring to a first case 630 of FIG. 6B, an example is illustrated in which, during a channel selection period, the electronic device transmits one packet, based on one channel selection unit. In this case, for example, the electronic device may be preconfigured to have a threshold value of 75% for a transmission success rate.

According to an embodiment, during the channel selection period, the electronic device may transmit a P1 packet block to the receiving device and may receive an ACK therefor as feedback information. In this case, the transmission success rate may be determined to be 100%, which is a value equal to or greater than the threshold value, and accordingly, the electronic device may classify a channel on which the P1 packet block has been transmitted as a quality related to channel maintenance. The electronic device having classified the channel on which the above-described packet has been transmitted as the quality related to channel maintenance may maintain, as a transmission channel, the channel on which the P1 packet block has been transmitted, at a start point of a next channel selection period.

According to an embodiment, during the channel selection period, the electronic device may transmit a P2 packet block to the receiving device and may receive a corresponding NACK as feedback information. In this case, the transmission success rate may be determined to be 0%, which is a value less than the threshold value, and accordingly, the electronic device may classify a channel on which the P2 packet block has been transmitted as a quality related to channel change. Although not illustrated in the first case 630, the electronic device having classified the channel on which the above-described packet has been transmitted as the quality related to channel change may change a transmission channel at a start point of a next channel selection period by giving priority to a channel classified as having good quality, based on the entire channel map updated at a previous time point. In addition, according to an embodiment, a changed channel may be calculated by various algorithms, and examples thereof may include channel selection algorithms #1 and #2 defined in the Bluetooth SIG standard.

In addition, according to an embodiment, although various embodiments of the disclosure describe operations based on an electronic device which transmits a packet, a receiving device which receives a packet may also perform substantially the same and corresponding operations. For example, when the electronic device has determined to maintain or change a channel, the electronic device may indicate the receiving device to maintain or change the channel, or the receiving device may autonomously perform the above-described operations to determine whether to maintain or change the channel.

Referring to a second case 640 of FIG. 6B, an example in which the electronic device transmits multiple packets based on one channel selection unit during a channel selection period is illustrated. In this case, for example, the electronic device may be preconfigured to have a threshold value of 75% for a transmission success rate.

According to an embodiment, during a channel selection period, the electronic device may transmit packet blocks of P1 to PN (for example, N = 8) to a receiving device, and may receive, as feedback information, at least one ACK or NACK corresponding thereto. For example, when the electronic device transmits 8 packets on one specific channel and receives 7 ACKs and 1 NACK corresponding to the respective packets, the transmission success rate may be determined to be 87.5%, which is a value equal to or greater than the threshold value, and accordingly, the electronic device may classify a specific channel on which the P1 to PN packet blocks have been transmitted as a quality related to channel maintenance. The electronic device having classified the specific channel on which the above-described packet has been transmitted as the quality related to channel maintenance may maintain, as a transmission channel, the specific channel on which the P1 to PN packet blocks have been transmitted, at a start point of a next channel selection period.

According to an embodiment, in the same situation as described above, the electronic device may transmit 8 packets on one specific channel and receive 4 ACKs and 4 NACKs corresponding to the respective packets as feedback information. In this case, the transmission success rate may be determined to be 50%, which is a value less than the threshold value, and accordingly, the electronic device may classify a specific channel on which the P1 to PN packet blocks have been transmitted as a quality related to channel change. Although not illustrated in the second case 640, the electronic device having classified the specific channel on which the above-described packet has been transmitted as the quality related to channel change may change a transmission channel at a start point of a next channel selection period by giving priority to a channel classified as having good quality, based on the entire channel map updated at a previous time point. In addition, according to an embodiment, a changed channel may be calculated by various algorithms, and examples thereof may include channel selection algorithms #1 and #2 defined in the Bluetooth SIG standard.

According to an embodiment, in the second case 640, the electronic device is described as receiving, from the receiving device, an ACK or a NACK corresponding to each transmitted packet block. However, the disclosure is not limited thereto, and the electronic device may receive, as feedback information, a bit string including corresponding bits within one selective ACK.

In addition, according to an embodiment, although various embodiments of the disclosure describe operations based on an electronic device which transmits a packet, a receiving device which receives a packet may also perform substantially the same and corresponding operations. For example, when the electronic device has determined to maintain or change a channel, the electronic device may indicate the receiving device to maintain or change the channel, or the receiving device may autonomously perform the above-described operations to determine whether to maintain or change the channel.

According to various embodiments of the disclosure, as illustrated in FIG. 6B, the number of packets transmitted during a channel selection period may be one or more, and when there are multiple packet blocks, a channel on which each packet is transmitted may be different.

Referring to a third case 650 of FIG. 6C, an example is illustrated in which, during a channel selection period, the electronic device transmits multiple packets, based on multiple channel selection units. In this case, for example, the electronic device may be preconfigured to have a threshold value of 75% for a transmission success rate.

According to an embodiment, during a channel selection period, the electronic device may transmit packet blocks of P1 to PN (for example, N = 4) corresponding to channels #2, #19, #6, and #11 to the receiving device, and may receive, as feedback information, at least one ACK or NACK corresponding thereto. For example, when the electronic device transmits one packet (for example, a total of 4 packet blocks) on each of channels corresponding to a channel set {2, 19, 6, 11}, and receives ACKs for packets transmitted on channels #2, #6, and #11, and receives an NACK for packet P2 transmitted on channel #19, the transmission success rate may be determined to be 75%, which is a value equal to or greater than the threshold value, and accordingly, the electronic device may classify, as a quality related to channel maintenance, a portion of a channel set for channels for which the ACKs are received, among channels on which P1 to PN packet blocks have been transmitted. The electronic device having classified the portion of the channel set for which the above-described ACKs have been received as the quality related to channel maintenance may maintain, at a start point of a next channel selection period, channels #2, #6, and #11 as transmission channels. According to an embodiment, the electronic device may change a transmission channel for transmission of a P2 packet block from channel #19, for which the NACK is received, to a channel classified as having good quality according to the entire channel map updated at a previous time point (for example, with priority given thereto). In addition, according to an embodiment, a changed channel may be calculated by various algorithms, and examples thereof may include channel selection algorithms #1 and #2 defined in the Bluetooth SIG standard.

According to an embodiment, during a channel selection period, the electronic device may transmit packet blocks (for example, N = 4) of P1 to PN corresponding to channels #2, #13 (for example, a channel changed from channel #19), #6, and #11 to the receiving device, and may receive, as feedback information, at least one ACK or NACK corresponding thereto. For example, when the electronic device transmits one packet (for example, a total of 4 packet blocks) on each of channels corresponding to a channel set {2, 13, 6, 11}, receives ACKs for packet P1 and packet P3 transmitted on channels #2 and #6, and receives NACKs for packet P2 and packet P4 transmitted on channels #13 and #11, the transmission success rate may be determined to be 50%, which is a value less than the threshold value, and accordingly, the electronic device may classify a set of channels on which the P1 to PN packet blocks have been transmitted as having a quality related to channel change. According to an embodiment, the electronic device having classified the set of channels on which the above-described packets have been transmitted as having the quality related to channel change may change a transmission channel set at a start point of a next channel selection period by giving priority to a channel classified as having good quality, based on the entire channel map updated at a previous time point. In addition, according to an embodiment, a changed channel may be calculated by various algorithms, and examples thereof may include channel selection algorithms #1 and #2 defined in the Bluetooth SIG standard.

According to an embodiment, during a next channel selection period, the electronic device may transmit packet blocks (for example, N = 4) of P1 to PN corresponding to a changed channel set including channels #9, #18, #4, and #7 to the receiving device, and may receive ACKs corresponding thereto as feedback information for all channels or packet blocks. In this case, the transmission success rate may be determined to be 100%, which is a value equal to or greater than the threshold value, and accordingly, the electronic device may classify a channel set on which the P1 to PN packet blocks have been transmitted as a quality related to channel maintenance. The electronic device having classified the channel set on which the above-described packets have been transmitted as having the quality related to channel maintenance may maintain, at a start point of a next channel selection period, channels included in the channel set on which the P1 to PN packet blocks have been transmitted as transmission channels.

According to an embodiment, although not illustrated in the third case 650, when the number (M) of multiple channel selection units is greater than the number (N) of packets transmitted during the channel selection period, the electronic device may operate in a manner similar to the above-described operations, wherein only N channels among the M channels are allocated for packet transmission, and the remaining (M-N) channels may be considered to be allocable when a portion of a channel set is changed. Conversely, when the number (M) of multiple channel selection units is smaller than the number (N) of packets transmitted during the channel selection period, the electronic device may operate in a manner similar to the above-described operations, wherein each of the M channels may be considered to be allocable to a minimum [N/M] number and a maximum [N/M] number of packet transmissions.

Referring to a fourth case 660 of FIG. 6C, an example is illustrated in which, during a channel selection period, the electronic device transmits a packet including multiple multi-blocks, based on one channel selection unit. In this case, for example, the electronic device may be preconfigured to have a threshold value of 75% for a transmission success rate.

According to an embodiment, during the channel selection period, the electronic device may transmit, to the receiving device, a packet block of P1 including N multi-blocks (for example, N = 8), and may receive, as feedback information, at least one selective ACK corresponding thereto. For example, when the electronic device transmits packet P1 including 8 multi-blocks on one specific channel and receives a selective ACK configured by a bit string of 11011111 corresponding to feedback for each of the multi-blocks, the transmission success rate may be determined to be 87.5%, which is a value equal to or greater than the threshold, and accordingly, the electronic device may classify a specific channel on which the P1 packet block has been transmitted as a quality related to channel maintenance. The electronic device having classified the specific channel on which the above-described packet has been transmitted as the quality related to channel maintenance may maintain the specific channel on which the P1 packet block has been transmitted as a transmission channel at a start point of a next channel selection period.

For example, in the same situation as described above, when the electronic device transmits packet P2 including 8 multi-blocks on one specific channel and receives, as feedback information, a selective ACK configured by a bit string of 10010011 corresponding to feedback for each of the multi-blocks, the transmission success rate may be determined to be 50%, which is a value less than the threshold value, and accordingly, the electronic device may classify the specific channel on which the P1 packet block has been transmitted as a quality related to channel change. Although not illustrated in the fourth case 660, the electronic device having classified the specific channel on which the above-described packet has been transmitted as the quality related to channel change may change a transmission channel at a start point of a next channel selection period by giving priority to a channel classified as having good quality, based on the entire channel map updated at a previous time point. In addition, according to an embodiment, a changed channel may be calculated by various algorithms, and examples thereof may include channel selection algorithms #1 and #2 defined in the Bluetooth SIG standard.

In addition, according to an embodiment, although various embodiments of the disclosure describe operations based on an electronic device which transmits a packet, a receiving device which receives a packet may also perform substantially the same and corresponding operations. For example, when the electronic device has determined to maintain or change a channel, the electronic device may indicate the receiving device to maintain or change the channel, or the receiving device may autonomously perform the above-described operations to determine whether to maintain or change the channel.

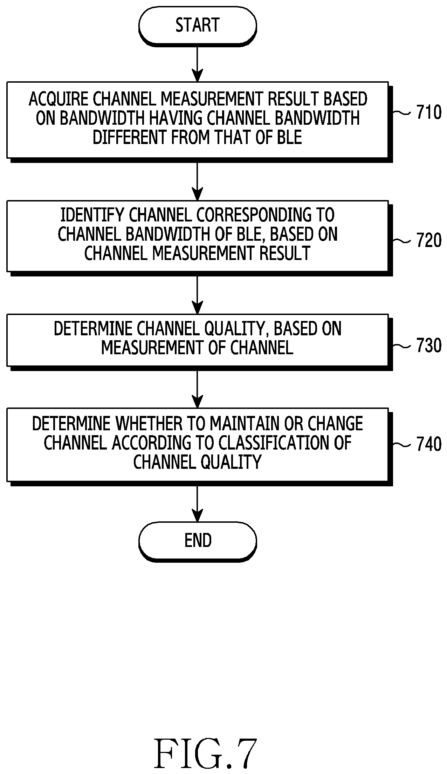

Various embodiments of the disclosure may include at least one of all, some, or a combination of some of the various operations and examples described in FIGS. 5A to 6C. Each of the operations may not be regarded as an essential component, and any combinations may be included as long as substantially the same effect is achieved. Hereinafter, based on the various examples described above, a specific operation flow of the electronic device for determining a channel state and selecting a channel will be described in FIG. 7.

FIG. 7 illustrates an operation flow of an electronic device for channel selection and management according to various embodiments of the disclosure. Specifically, FIG. 7 illustrates an operation flow of an electronic device for performing various embodiments described in FIGS. 5A to 6C or a combination thereof.

In step 710, an electronic device may acquire a channel measurement result based on a bandwidth having a channel bandwidth different from a channel bandwidth of BLE. According to an embodiment, the electronic device may acquire the channel measurement result based on the bandwidth having the channel bandwidth different from the channel bandwidth of the BLE, at a packet transmission start time point including a start point of an OOBUI. According to an embodiment, various embodiments in which the electronic device acquires a channel measurement result of another system are specifically described in FIGS. 5A and 5B.

In step 720, the electronic device may identify a channel corresponding to the channel bandwidth of the BLE, based on the channel measurement result. According to an embodiment, the electronic device may identify one of Bluetooth channels corresponding to the channel measurement result acquired in step 710 as a transmission channel. According to an embodiment, various embodiments in which the electronic device identifies, as a transmission channel, a Bluetooth channel determined to have good quality, based on a channel measurement result, are specifically described in FIGS. 5A and 5B.

In step 730, the electronic device may determine channel quality, based on measurement of the identified channel. According to an embodiment, the electronic device may transmit at least one packet on the identified Bluetooth channel as the transmission channel and determine channel quality based thereon. According to an embodiment, various embodiments for determining and classifying the quality of a transmission channel by the electronic device are specifically described in FIGS. 5A to 6C.

In step 740, the electronic device may determine whether to maintain or change the channel, according to a classification of the channel quality. According to an embodiment, at a time point at which a specific channel selection period has elapsed, the electronic device may determine whether to maintain the channel on which the packet has been transmitted as the transmission channel, or to change the transmission channel to a different channel, according to a classification of the transmission channel. According to an embodiment, various embodiments for selecting a channel based on Bluetooth communication by the electronic device are specifically described in FIGS. 5A to 6C.

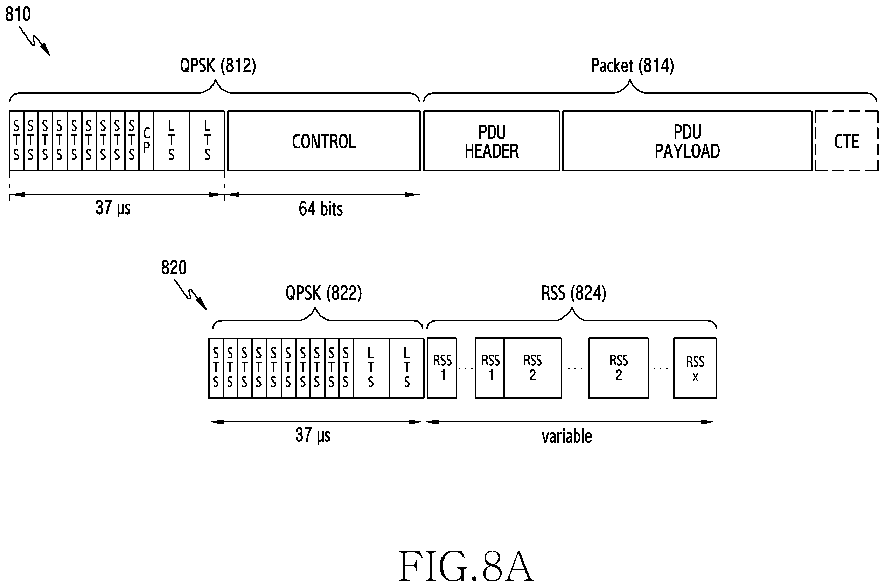

FIG. 8A illustrates an example of a training sequence transmitted for transmission speed selection according to various embodiments of the disclosure. More specifically, referring to FIG. 8A, a method for selecting a transmission speed before and after data transmission in order to improve a transmission success rate is described in detail.

According to an embodiment, referring to FIG. 8A, a first packet structure 810 according to a Bluetooth standard specification of a payload transmitted by an electronic device is illustrated. According to the first packet structure 810, before transmission of a payload including a data packet, the electronic device may transmit a short training sequence (STS) or a long training sequence (LTS) in advance for modulation of the data payload. Generally, the STS may include 4 symbols corresponding to quadrature phase shift keying (QPSK) constellation points (for example, {-1, -j, +j, +1}) for QPSK modulation, and the LTS may include 17 symbols as a Zadoff-Chu sequence for more specific parameter measurement. According to an embodiment, the first packet structure 810 corresponding to a BLE HDT packet structure may include a 37$\mu$s training sequence and a 64-bit control field, which may be for QPSK modulation 812. In addition to the above, the first packet structure 810 may further include a packet 814 (hereinafter, interchangeably referred to as a data packet for convenience) including a protocol data unit (PDU) header and a PDU payload. According to an embodiment, the first packet structure 810 is used for the purpose of frequency synchronization and thus may use only a QPSK modulation scheme as a module.

According to various embodiments of the disclosure, a method in which the electronic device additionally transmits a newly defined training sequence prior to transmission of a data packet, unlike transmission of the training sequence of the first packet structure 810, is described in detail below.

Referring to a second packet structure 820 (hereinafter, a rate selection sequence (RSS) structure) of FIG. 8A, the RSS structure 820 may further include an RSS field in addition to the training sequence 822 described above. The training sequence is an optional element which is not an essential element and may have a length of 37 $\mu$s based on QPSK modulation, as described above. An RSS field 824 may include at least one sequence based on various modulation schemes. According to an embodiment, the type of RSS included in the RSS field may vary according to an individual modulation scheme, and the number of repetitions of each RSS may also vary. For example, a sequence for at least one RSS1 among RSS fields may sequentially include a combination of 8 symbols of 8-PSK, and a sequence for at least one RSS2 may sequentially include a combination of 16 symbols of 16 quadrature amplitude modulation (QAM). According to an embodiment, when a packet for the RSS field is transmitted independently and separately from a data packet, an order of symbols of an STS for an RSS packet transmitted independently may be changed (for example, {+1, +j, -j, -1}) to distinguish the RSS packet from an opposite case. According to an embodiment, when an RSS packet is attached to the data packet in the form of a field, a control field may be expressed as a structure of the RSS field.

As described above, in addition to transmitting a conventional training sequence for frequency synchronization, the electronic device may further transmit an RSS field (or an RSS packet) and receive feedback on the RSS field and may adaptively adjust (or select or determine) a transmission speed by determining a modulation scheme for a data packet based on the feedback.

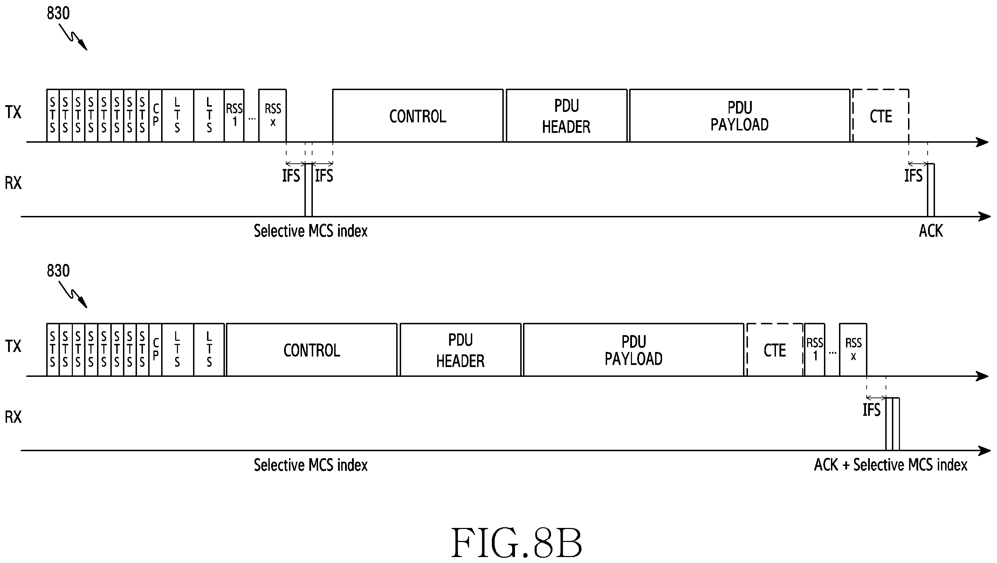

According to various embodiments of the disclosure, the names, contents, or lengths of the above-described fields are merely examples, and the disclosure is not limited thereto, and any field may be defined as long as the field performs substantially the same function. Hereinafter, FIG. 8B illustrates a specific example of selecting a transmission speed by using an RSS structure.

FIG. 8B illustrates various examples for selecting a modulation scheme and a transmission speed, based on transmission of a training sequence, according to various embodiments of the disclosure. Referring to FIG. 8B, a first case 830 in which an RSS packet is transmitted first prior to transmission of a data packet, and a second case 840 in which an RSS field is transmitted together in the form of a field after a last field of a data packet are illustrated.

Referring to the first case 830, the electronic device may transmit a training sequence (optional) and an RSS packet to a receiving device and may receive a selected modulation and coding scheme (MCS) index, based thereon. In general, the first case 830 may be suitable to be performed after a channel is changed when a channel condition is determined to be poor.

According to an embodiment, the receiving device may identify, according to a channel condition, a most suitable modulation scheme, based on at least one RSS1 relating to a first modulation scheme (for example, 8-PSK) to at least one RSSn relating to an n-th modulation scheme (for example, 16QAM), which are included in the RSS packet received from the electronic device, and may notify the electronic device of the identified modulation scheme through an MCS index. Accordingly, the electronic device having received the MCS index may determine a modulation scheme of a data packet, based on the MCS index, and accordingly, a transmission speed may be determined.

Referring to the second case 840, the electronic device may add an RSS field after a last field of a data packet, transmit the same to a receiving device, and receive at least one of a selective MCS or an ACK (or a NACK), based thereon. Generally, the second case 840 may be suitable for being performed when a channel condition is determined to be good, and a next data packet is also determined to be transmitted through the same channel. In particular, in view of the fact that an inter-frame space (IFS) between an RSS packet, an MCS index, and a data packet required in the first case 830 occupies a significant portion, the second case 840 may be advantageous in terms of resource efficiency.

According to various embodiments of the disclosure, there may be a case in which the receiving device determines that decoding is difficult even by using a lowest MCS defined in an RSS. In this case, the electronic device may receive MCS index = 0 from the receiving device and may change a channel according to the channel selection algorithm (CSA) scheme described above.

According to an embodiment, although not illustrated in FIG. 8B, when the electronic device has identified that a channel condition is good and determined that selection of a transmission speed is not required, the electronic device may omit transmission of an RSS field, thereby reducing overhead.

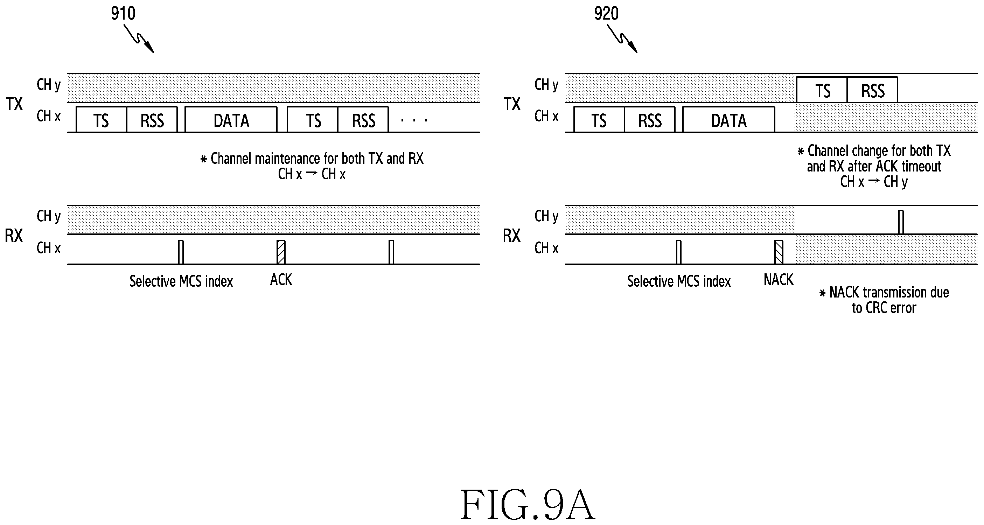

Hereinafter, various embodiments of the above-described RSS-based transmission speed selection and channel selection are described through FIGS. 9A to 9C. However, these embodiments are merely examples, and the various embodiments are not limited thereto and may include each individual operation itself or any combination thereof.

FIG. 9A to FIG. 9C illustrate specific examples of performing channel selection and transmission speed determination between electronic devices, according to various embodiments of the disclosure. Hereinafter, in order to describe the embodiments of FIGS. 9A to 9C, each packet may be briefly defined for convenience. For example, a training sequence including an STS, a cyclic prefix (CP), and an LTS described above with reference to FIGS. 8A and 8B may be defined as TS, RSS1 to RSSn may be defined as RSS, and a data packet including a control field, a PDU header, a PDU payload, and a constant tone extension (CTE) may be defined as DATA. According to various embodiments of the disclosure, FIGS. 9A to 9C illustrate various cases according to whether decoding of data is successful and whether a channel is selected or changed.

Referring to FIG. 9A, a first case 910 illustrates a case in which a receiving device successfully decodes data and an electronic device receives an ACK. For example, the electronic device may transmit a training sequence or an RSS on channel #x and may receive an MCS index as feedback therefor. The electronic device may perform modulation of a data packet based on the MCS index, and transmit the modulated data packet, and may receive an ACK in response thereto. The electronic device having received the ACK may determine to maintain channel #x as a transmission channel and may transmit a training sequence or an RSS by using channel #x as it is.

Referring to FIG. 9A, a second case 920 illustrates a case in which a receiving device successfully decodes data, but an electronic device receives a NACK (for example, a cyclic redundancy check (CRC) error occurs). For example, the electronic device may transmit a training signal or an RSS on channel #x and may receive an MCS index as feedback therefor. The electronic device may perform modulation of a data packet based on the MCS index, and transmit the modulated data packet, and when decoding of the data packet is successfully performed by the receiving device, but a CRC error occurs, the electronic device may receive a NACK. According to an embodiment, the electronic device that has not received an ACK during a predefined ACK time may change a transmission channel from channel #x to channel #y after an ACK timeout and may indicate the receiving device to perform such a channel change. According to an embodiment, in a process in which the electronic device changes the transmission channel after the ACK timeout, the specific embodiments described above with reference to FIGS. 5A to 6C may be used in combination. Thereafter, the electronic device may transmit a training sequence or an RSS on the changed channel #y.

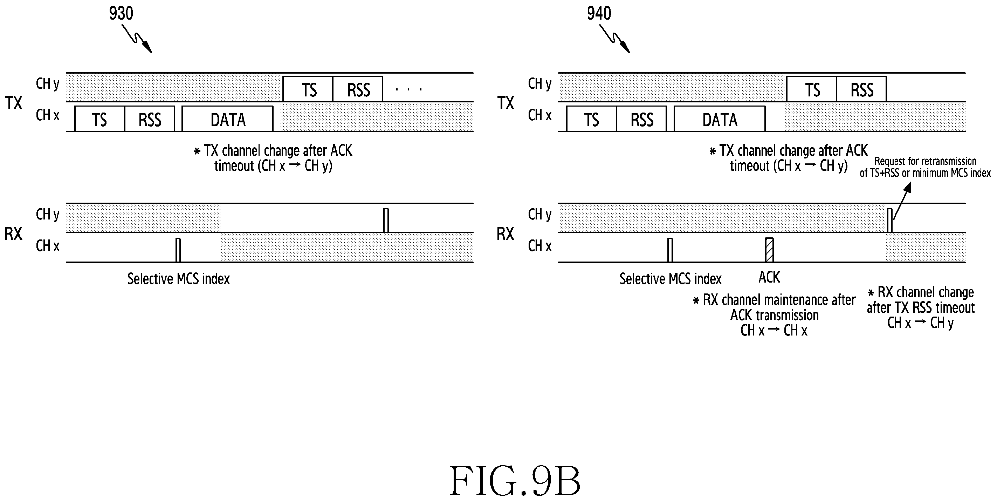

Referring to FIG. 9B, a third case 930 illustrates a case in which a receiving device fails to decode data, and thus an electronic device does not receive any feedback. For example, the electronic device may transmit a training signal or an RSS on channel #x and may receive an MCS index as feedback therefor. The electronic device may perform modulation of a data packet based on the MCS index, and transmit the modulated data packet, and in case of failure of decoding of the data packet by the receiving device, the receiving device may not transmit neither an ACK nor an NACK, and may change a reception channel (for example, determine that channel #x is in a poor condition, and change a transmission channel to channel #y). According to an embodiment, the electronic device having received neither an ACK nor a NACK during a predefined ACK time may, similar to the second case 920, change a transmission channel from channel #x to channel #y after an ACK timeout. According to an embodiment, in a process in which the receiving device changes the reception channel after a decoding failure, and in a process in which the electronic device changes the transmission channel after the ACK timeout, the specific embodiments described above with reference to FIGS. 5A to 6C may be used in combination. Thereafter, the electronic device may transmit a training sequence or an RSS on the changed channel #y.

Referring to FIG. 9B, a fourth case 940 illustrates a case in which a receiving device successfully decodes data and transmits an ACK, but an electronic device fails to receive the ACK. For example, the electronic device may transmit a training sequence or an RSS on channel #x and may receive an MCS index as feedback therefor. The electronic device may perform modulation of a data packet based on an MCS index and transmit the modulated data packet, and an ACK therefor may be transmitted by the receiving device. However, due to a specific reason (for example, a channel condition such as degradation of channel quality), the electronic device that has not received an ACK transmitted by the receiving device during a predefined ACK time may, similar to the second case 920 or the third case 930, change a transmission channel from channel #x to channel #y after an ACK timeout. According to an embodiment, the receiving device may maintain the transmission channel after transmitting the ACK, but when the training sequence or RSS is not received from the electronic device for a predefined TS+RSS time, the receiving device may change a reception channel from channel #x to channel #y after a TS+RSS timeout. According to an embodiment, in a process in which the electronic device changes the transmission channel after the ACK timeout and in a process in which the receiving device changes the reception channel after the TS+RSS timeout, the specific embodiments described above with reference to FIGS. 5A to 6C may be used in combination. Thereafter, the electronic device may transmit a training sequence or an RSS on the changed channel #y and may receive a minimum MCS index (for example, QPSK) or an indicator requesting retransmission of the training sequence and RSS from the receiving device, based thereon.

According to various embodiments of the disclosure, the first case 910 to the fourth case 940 are described as a case in which the electronic device receives an ACK or a NACK with respect to a data packet transmitted by the electronic device. However, the disclosure is not limited thereto, and as described above with reference to FIGS. 5A to 6C or FIGS. 8A and 8B, the electronic device may transmit multiple data packets and may receive, in response thereto, a selective ACK including a bit string corresponding to multiple blocks. In addition, according to various embodiments, reception of the ACK or the NACK may be replaced with an embodiment in which a channel change is determined by comparing a ratio of the number of ACKs received during a channel selection period with a threshold value.

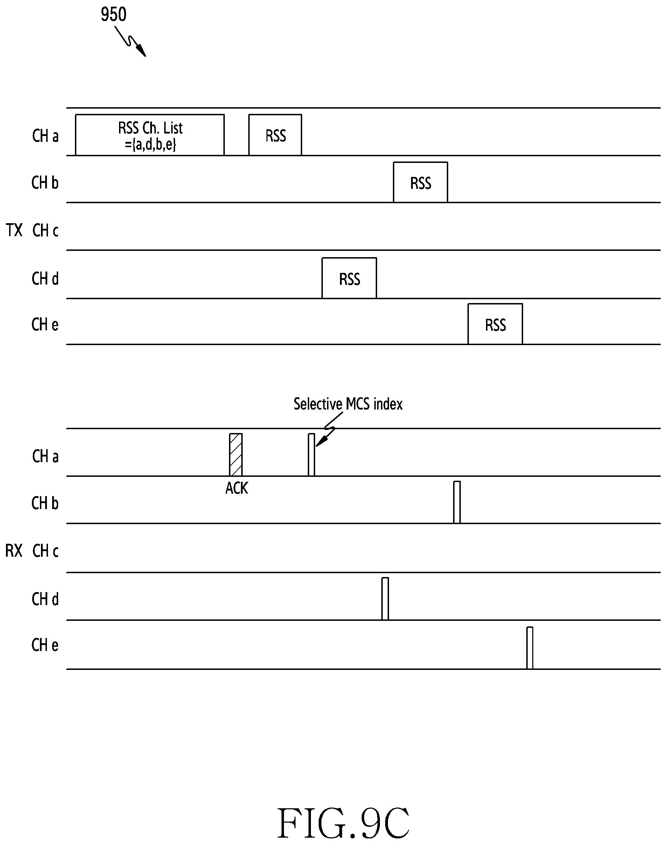

Referring to FIG. 9C, a fifth case 950 illustrates an example of using an RSS packet to manage a map of Bluetooth channels. More specifically, an electronic device may identify a condition of one or more channels by transmitting an RSS packet on at least one selected channel (for example, including at least one of a single channel to all available channels). In particular, according to an embodiment, the electronic device may perform the operation of the fifth case 95 when there is no data packet to be transmitted or when channel situation detection is required, but the disclosure is not necessarily limited thereto.

According to an embodiment, the electronic device may identify (or acquire) a packet including a channel list (for example, a channel set {#a, #d, #b, #e}) for transmitting an RSS. The electronic device may transmit the RSS channel list on channel #a and receive an ACK therefor from the receiving device, so as to determine to maintain channel #a as a transmission channel. Thereafter, the electronic device may transmit an RSS on channel #a to receive an MCS index, transmit an RSS on channel #d to receive an MCS index, transmit an RSS on channel #b to receive an MCS index, and transmit an RSS on channel #e to receive an MCS index. The electronic device may identify a condition of each channel, based on an MCS index for each channel.

According to an embodiment, although not illustrated in FIG. 9C, the electronic device may generate or update a channel map for a channel set included in the RSS channel list, based on the received MCS index. In addition, the electronic device may perform a channel management operation for channel maintenance or change, based on the identified channel map. In addition, the electronic device may modulate and transmit a data packet on each channel, based on the received MCS index.

According to various embodiments of the disclosure, a channel included in a channel set and an RSS transmission order are only examples, and the disclosure is not limited thereto, and the above-described embodiment for identifying a channel condition according to RSS transmission may be modified or performed in combination with various embodiments for generating and managing a channel map.

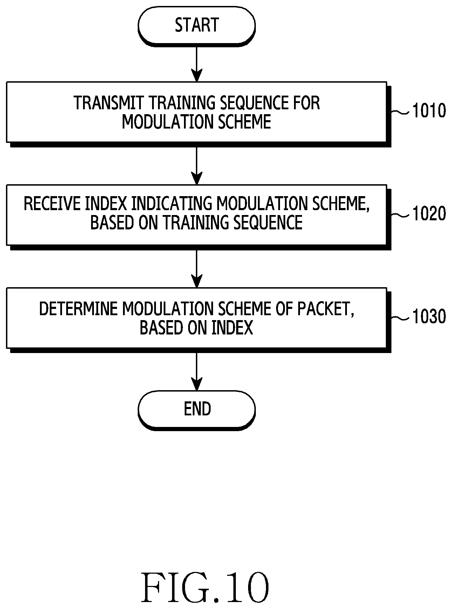

FIG. 10 illustrates an operation flow of an electronic device for selecting a transmission speed according to various embodiments of the disclosure.

In step 1010, an electronic device may transmit a training sequence for a modulation scheme to a receiving device. According to an embodiment, the electronic device may transmit, to the receiving device, one or more sequences including at least one training sequence for a first modulation scheme to at least one training sequence for an n-th modulation scheme. More specifically, the one or more sequences may indicate an RSS field and may be configured in order starting from a sequence including a modulation scheme of a lower order (for example, a lower modulation rate). According to various embodiments, a detailed description of one or more RSSs transmitted by the electronic device is provided in FIGS. 8A and 8B.

In step 1020, the electronic device may receive an index (for example, an MCS index) indicating a modulation scheme identified based on a training sequence. According to an embodiment, the receiving device may determine a modulation scheme for a data packet, based on an RSS and a channel condition, and may transmit an MCS index to the electronic device as a result thereof. According to various embodiments, a detailed description of the MCS index received by the electronic device is described in FIGS. 8A to 9C.

In step 1030, the electronic device may determine a modulation scheme of a data packet, based on the received index. According to an embodiment, the electronic device may determine a modulation scheme of a data packet transmitted on a channel, based on the MCS index, and transmit the data packet based on the determined modulation scheme. According to various embodiments, the electronic device may perform various channel selection operations for channel maintenance or change, based on feedback received from the receiving device, together with an operation of selecting a modulation scheme or a transmission speed of the data packet. According to various embodiments, detailed descriptions of the data packet transmitted by the electronic device and channel selection are provided in FIGS. 8A to 9C.

According to various embodiments, the electronic device may perform at least one of all, some, or a combination of various operations for channel selection, as described in FIGS. 5A to 7, or various operations for selecting a transmission speed, as described in FIGS. 8A to 9C.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a portable electronic device.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment provided by the disclosure. Therefore, the scope of the disclosure should not be defined as being limited to the embodiments set forth herein but should be defined by the appended claims and equivalents thereof.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein but should be defined by the appended claims and equivalents thereof.

**Claims**

1.    An electronic device comprising:

a communication circuit for Bluetooth low energy (BLE); and
a processor coupled with the communication circuit, and configured to:

acquire, at a first time point, a first channel measurement result based on a channel bandwidth different from a channel bandwidth of the BLE;
identify, based on the first channel measurement result , a first channel corresponding to the channel bandwidth of the BLE as a transmission channel;
determine channel quality of the first channel based on a channel measurement for the first channel; and
at a second time point at which a predetermined period has elapsed from the first time point:

in case that the channel quality of the first channel is determined as a category for a channel maintenance, maintain the first channel as the transmission channel, or
in case that the channel quality of the first channel is determined as a category for a channel change, change the transmission channel to a second channel different from the first channel.

2.    The electronic device of claim 1, wherein, in order to change the transmission channel to the second channel different from the first channel, the processor is configured to:

acquire, at the second time point, a second channel measurement result based on the channel bandwidth different from the channel bandwidth of the BLE; and
change, based on the second channel measurement result, the transmission channel to the second channel corresponding to the channel bandwidth of the BLE.

3.    The electronic device of claim 1, wherein, in order to determine, based on the channel measurement for the first channel, the channel quality of the first channel, the processor is configured to:

receive feedback on a signal transmitted on the first channel; and
based on the feedback:

determine the channel quality of the first channel as the category for the channel maintenance, or
determine the channel quality of the first channel as the category for the channel change.

4. The electronic device of claim 3,

   wherein the signal transmitted on the first channel includes at least one packet,
   wherein the feedback includes at least one acknowledgment (ACK) or at least one negative acknowledgment (NACK) each of which corresponds to the at least one packet, respectively, and
   wherein the channel quality of the first channel is determined as the category for the channel maintenance or the category for the channel change based on a comparison between a first threshold value and a ratio of a number of the at least one packet to a number of the at least one ACK.

5. The electronic device of claim 3, wherein the signal transmitted on the first channel includes at least one block, and
   wherein the feedback is determined based on a comparison between a transmission success rate of the at least one block and a first threshold value.

6. The electronic device of claim 1, wherein the processor is further configured to:

   transmit, on the first channel, one or more sequences include at least one training sequence for a first modulation scheme and at least one training sequence for a second modulation scheme;
   receive, based on the one or more sequences, an index indicating a modulation scheme; and
   determine, based on the index, a modulation scheme of a packet of a first signal transmitted through the first channel.

7. The electronic device of claim 6, wherein the processor is further configured to:

   in case that an ACK for the first signal is received, maintain the first channel as the transmission channel; or
   in case that an NACK for the first signal is received or a preconfigured ACK time is exceeded, change the transmission channel to the second channel.

8. The electronic device of claim 6, wherein the processor is further configured to:

   transmit the one or more sequences on one or more channels including the first channel; and
   receive, based on the one or more sequences, indexes indicating one or more modulation schemes corresponding to the one or more channels.

9. The electronic device of claim 6, wherein the second modulation scheme includes a scheme having a higher modulation rate than a modulation rate of the first modulation scheme.

10. The electronic device of claim 6, wherein the processor is further configured to determine, based on the channel quality of the first channel, whether to transmit the one or more sequences on the first channel.

11. A method performed by an electronic device, the method comprising:

    acquiring, at a first time point, a first channel measurement result based on a channel bandwidth different from a channel bandwidth of Bluetooth low energy (BLE);
    identifying, based on the first channel measurement result , a first channel corresponding to the channel bandwidth of the BLE as a transmission channel;
    determining channel quality of the first channel based on a channel measurement for the first channel; and
    at a second time point at which a predetermined period has elapsed from the first time point:

       in case that the channel quality of the first channel is determined as a category for a channel maintenance, maintaining the first channel as the transmission channel, or
       in case that the channel quality of the first channel is determined as a category for a channel change, changing the transmission channel to a second channel different from the first channel.

12. The method of claim 11, wherein the changing of the transmission channel to the second channel different from the first channel comprises:

    acquiring, at the second time point, a second channel measurement result based on the channel bandwidth different from the channel bandwidth of the BLE; and
    changing, based on the second channel measurement result, the transmission channel to the second channel corresponding to the channel bandwidth of the BLE.

13. The method of claim 11, wherein the determining of the channel quality of the first channel, based on the channel measurement for the first channel, comprises:

receiving feedback on a signal transmitted on the first channel; and
based on the feedback:

determining the channel quality of the first channel as the category for the channel maintenance, or
determining the channel quality of the first channel as the category for the channel change.

14. The method of claim 13, wherein the signal transmitted on the first channel includes at least one packet,

wherein the feedback includes at least one acknowledgment (ACK) or at least one negative acknowledgment (NACK) each of which corresponds to the at least one packet, respectively, and
wherein the channel quality of the first channel is determined as the category for the channel maintenance or the category for the channel change, based on a comparison between a first threshold value and a ratio of a number of the at least one packet to a number of the at least one ACK.

15. The method of claim 13, wherein the signal transmitted on the first channel includes at least one block, and
wherein the feedback is determined based on a comparison between a transmission success rate of the at least one block and a first threshold value.

FIG.1

202

204

Link 1    Link 2

201

FIG.2

311

300

| Communication circuit (310) |—| Processor (330) |—| Memory (320) |

# FIG.3

410

BT Classic

1          79

2402          →|←— 1 MHz          2480          f [MHz]

420

□ Data
▨ Advertising

BLE

37 0 1 2 3 4 5 6 7 8 9 10 38 11 12 13 14 15 16 17 18 19 20 21 22 23 24 25 26 27 28 29 30 31 32 33 34 35 36 39

2402          →|←— 1 MHz          2480

430

Wi-Fi

1 2 3 4 5 6 7 8 9 10 11 12 13 14

2412          |←——→| 22 MHz          2484

FIG.4A

# FIG.4B

FIG.5A

EP 4 765 935 A1

FIG.5B

**610**

good → bad        bad → good        good → good

TX    Single block        Single block        Single block

RX        NACK        ACK        ACK

**620**

good → bad        bad → good        good → good

TX    Multiple blocks        Multiple blocks        Multiple blocks

RX        Selective ACK        Selective ACK        Selective ACK

ACK=01001100        ACK=11011111        ACK=11111111
1: Reception success
0: Reception failure

FIG.6A

630

Channel selection period

TX ··· [ P1 ]

Transmission success rate=1/1=100.0%
Transmission success rate threshold value =75%
success rate ≥ threshold value → channel maintenance

Channel selection period

[ P2 ]

Transmission success rate=0/1=0.0%
Transmission success rate threshold value=75%
success rate < threshold value → channel change

RX ···

ACK

NACK

640

Channel selection period

TX ··· [P1] [P2]  [PN]

Transmission success rate=7/8=87.5%
Transmission success rate threshold value=75%
success rate ≥ threshold value → channel maintenance

Channel selection period

··· [P1] [P2] ··· [PN]

Transmission success rate=4/8=50.0%
Transmission success rate threshold value=75%
success rate ≥ threshold value → channel change

RX ···

ACK  NACK    ACK

···  ACK  NACK    NACK

# FIG.6B

**650**

Channel selection period

TX  · · · | P1 | P2 | · · · | PN |

Ch 2  Ch 19  Ch 11

Transmission success rate=3/4=75.0%
Transmission success rate threshold value=75%
success rate ≥ threshold value →
channel set portion maintenance

Channel set X={2,19,6,11}

RX  · · · ⊓ ⊓ · · · ⊓

ACK  NACK  ACK

Channel selection period

TX  · · · | P1 | P2 | · · · | PN |

Ch 2  Ch 13  Ch 11

Transmission success rate=2/4=50.0%
Transmission success rate threshold value=75%
success rate ≥ threshold value →
channel set change

Channel set X'={2,13,6,11}

RX  · · · ⊓ ⊓ · · · ⊓

ACK  NACK  NACK

Channel selection period

TX  · · · | P1 | P2 | · · · | PN |

Ch 9  Ch 18  Ch 7

Transmission success rate=4/4=100.0%
Transmission success rate threshold value=75%
success rate ≥ threshold value → channel set maintenance

Channel set Y={9,18,4,7}

RX  · · · ⊓ ⊓ · · · ⊓

ACK  ACK  ACK

**660**

Channel selection period

TX  P1 | | | | · · · |

Transmission success rate=7/8=87.5%
Transmission success rate threshold value=75%
success rate ≥ threshold value → channel maintenance

RX  · · · ⊓

Selective ACK
= 11011111

Channel selection period

TX  P2 | | | | · · · |

Transmission success rate=4/8=50.0%
Transmission success rate threshold value=75%
success rate < threshold value → channel change

RX  ⊓

Selective ACK
= 10010011

# FIG.6C

START

ACQUIRE CHANNEL MEASUREMENT RESULT BASED ON BANDWIDTH HAVING CHANNEL BANDWIDTH DIFFERENT FROM THAT OF BLE ～ 710

IDENTIFY CHANNEL CORRESPONDING TO CHANNEL BANDWIDTH OF BLE, BASED ON CHANNEL MEASUREMENT RESULT ～ 720

DETERMINE CHANNEL QUALITY, BASED ON MEASUREMENT OF CHANNEL ～ 730

DETERMINE WHETHER TO MAINTAIN OR CHANGE CHANNEL ACCORDING TO CLASSIFICATION OF CHANNEL QUALITY ～ 740

END

FIG.7

FIG.8A

810

QPSK (812)

Packet (814)

STS STS STS STS SCP STS STS STS STS STS STS STS STS STS STS STS STS STS

STS

STS

37 µs

CONTROL

64 bits

PDU HEADER

PDU PAYLOAD

CTE

820

QPSK (822)

RSS (824)

STS STS STS STS STS STS STS STS STS STS STS STS

STS

STS

37 µs

RSS 1

RSS 1

RSS 2

RSS 2

RSS x

variable

FIG.8B

EP 4 765 935 A1

FIG.9A

EP 4 765 935 A1

FIG.9B

EP 4 765 935 A1

950

| | | |
|---|---|---|
| CH a | RSS Ch. List ={a,d,b,e} | RSS |
| CH b | | RSS |
| TX CH c | | |
| CH d | | RSS |
| CH e | | RSS |

Selective MCS index

| | |
|---|---|
| CH a | ACK |
| CH b | |
| RX CH c | |
| CH d | |
| CH e | |

# FIG.9C

START

TRANSMIT TRAINING SEQUENCE FOR
MODULATION SCHEME — 1010

RECEIVE INDEX INDICATING MODULATION SCHEME,
BASED ON TRAINING SEQUENCE — 1020

DETERMINE MODULATION SCHEME OF PACKET,
BASED ON INDEX — 1030

END

FIG.10

## INTERNATIONAL SEARCH REPORT

| International application No. |
| --- |
| **PCT/KR2024/010353** |

| A. | CLASSIFICATION OF SUBJECT MATTER |
| --- | --- |
| | **H04W 24/08**(2009.01)i; **H04W 4/80**(2018.01)i; **H04L 1/00**(2006.01)i; **H04L 1/1607**(2023.01)i; **H04L 1/20**(2006.01)i |

According to International Patent Classification (IPC) or to both national classification and IPC

| B. | FIELDS SEARCHED |
| --- | --- |

Minimum documentation searched (classification system followed by classification symbols)

H04W 24/08(2009.01); H04B 1/713(2011.01); H04B 7/00(2006.01); H04W 36/30(2009.01); H04W 4/80(2018.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: different, channel bandwidth, channel measurement, channel quality, tx channel, maintain, change, BLE

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2023-0002425 A (INTELLECTUAL DISCOVERY CO., LTD.) 05 January 2023 (2023-01-05) See paragraphs [0201]-[0296]; and figures 21-31. | 1-2,11-12 |
| A | | 3-10,13-15 |
| A | US 2018-0269925 A1 (KABUSHIKI KAISHA TOSHIBA) 20 September 2018 (2018-09-20) See paragraphs [0062]-[0086]; and figures 4 and 9. | 1-15 |
| A | US 2010-0317289 A1 (DESAI, Prasanna et al.) 16 December 2010 (2010-12-16) See paragraphs [0017]-[0053]; and figures 1-2 and 5. | 1-15 |
| A | US 2013-0077655 A1 (CHEN, Yen-Yu et al.) 28 March 2013 (2013-03-28) See paragraphs [0046]-[0054]; and figures 3-4. | 1-15 |
| A | US 2006-0013172 A1 (RUUSKA, Paivi M. et al.) 19 January 2006 (2006-01-19) See paragraphs [0011]-[0052]; and figure 2. | 1-15 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 October 2024** | **23 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/010353**

| Patent document cited in search report | | | Publication date (day/month/year) | Patent family member(s) | | | Publication date (day/month/year) |
|---|---|---|---|---|---|---|---|
| KR | 10-2023-0002425 | A | 05 January 2023 | CN | 115669051 | A | 31 January 2023 |
| | | | | EP | 4142359 | A1 | 01 March 2023 |
| | | | | US | 2023-0224958 | A1 | 13 July 2023 |
| | | | | WO | 2021-215776 | A1 | 28 October 2021 |
| US | 2018-0269925 | A1 | 20 September 2018 | EP | 3376683 | A1 | 19 September 2018 |
| | | | | JP | 2018-157430 | A | 04 October 2018 |
| | | | | US | 10284254 | B2 | 07 May 2019 |
| US | 2010-0317289 | A1 | 16 December 2010 | US | 8712330 | B2 | 29 April 2014 |
| US | 2013-0077655 | A1 | 28 March 2013 | TW | 201315168 | A | 01 April 2013 |
| | | | | US | 8817842 | B2 | 26 August 2014 |
| US | 2006-0013172 | A1 | 19 January 2006 | | None | | |

Form PCT/ISA/210 (patent family annex) (July 2022)